# EUROPEAN PATENT SPECIFICATION

(11) **EP 3 015 295 B1**
(45) Date of publication and mention of the grant of the patent: **24.05.2017**
(21) Application number: 15190567.6
(22) Date of filing: 20.10.2015
(51) Int. Cl.: B60C 23/10

(54) **VEHICLE TIRE MANAGEMENT SYSTEM**
FAHRZEUGREIFENVERWALTUNGSSYSTEM
SYSTÈME DE GESTION DE PNEU DE VÉHICULE

(30) Priority: 31.10.2014 US 201414529231
(43) Date of publication of application: 04.05.2016
(73) Proprietor: The Goodyear Tire & Rubber Company, Akron, Ohio 44316 (US)
(72) Inventor: BENEDICT, Robert Leon, Tallmadge, OH Ohio 44278 (US)
(74) Representative: Kutsch, Bernd

(56) References cited:
- EP-A1- 0 621 144
- DE-A1- 10 001 348
- US-A1- 2012 234 447

## Description

### Field of the Invention

The present invention generally relates to motor vehicles, and, more specifically, to a tire pressure management system for sensing and controlling the air pressure in the tires of a motor vehicle.

### Background of the Invention

The pressure to which the tires of a motor vehicle should be optimally inflated depends on the type of terrain over which the vehicle is to be driven. The pressure should be relatively high for hard surfaces such as paved roads, and relatively low for soft surfaces such as wet mud or loose sand.

It is possible to adjust the pressures in the individual tires to a desired value by stopping and exiting the vehicle, manually inflating the tires with a pump to increase the pressure or manually deflating the tires by opening the valves and allowing air to escape to decrease the pressure.

However, this operation is inconvenient and time consuming, and is especially undesirable in inclement weather or in an otherwise hostile environment. It also suffers from the disadvantage that it cannot be performed while the vehicle is moving.

One conventional system includes an air pump or compressor mounted on the vehicle body, and conduits leading from the compressor to valves provided in the vehicle wheels. The valves are remotely actuated by the operator from inside the vehicle to connect the compressor to the tires for inflation, or to connect the tires to the atmosphere for deflation. A disadvantage of this system is that a high pressure air connection including rotating wheel bearing air seals must be made between the conduits leading from the compressor and the rotating wheels. Such connections are difficult to construct and maintain, and a failure of the connections or valves will result in catastrophic deflation of the tires.

Another conventional system includes a high pressure reservoir and a controller valve provided on each wheel. The valves include pressure sensors which are connected to a display on a control unit mounted inside the vehicle. The valves are remotely actuated by the operator from inside the vehicle to connect the reservoirs to the tires for inflation, or to connect the tires to the atmosphere for deflation. Although this system eliminates the high pressure rotary air connections of the other system, the high pressure reservoirs must be periodically replenished from outside the vehicle. This limits the operating range of the vehicle and the number of times it may transition between operating conditions requiring different tire pressures. In addition, the valves are exposed to the atmosphere, and may be contaminated by dirt, sand or other ambient matter.

US-A-2012/234447 describes an automatic tire inflation system wherein a battery driven pump is used to pump air from the atmosphere into a tire.

DE-A-100 01 348 describes an electromechanical device for adjusting tire pressure within a tire. The air pressure is generated electromechanically at the wheels and measured at the wheels.

### Summary of the Invention

The invention relates to a tire management system in accordance with claim 1, to a wheel in accordance with claims 8 and to a vehicle in accordance with claims 12.

Dependent claims refer to preferred embodiments of the invention.

A tire management system for a vehicle in accordance with a preferred aspect of the present invention includes four wheels on each of which is mounted an air-inflatable tire defining a tire cavity. The system includes a bidirectional pump on each wheel for selectively pumping air from each tire to atmosphere for deflating each tire and for pumping air from atmosphere into each tire cavity for inflating each tire and a battery assembly mounted to each wheel for powering the bidirectional pumps, the battery assemblies each including a chargeable battery and a magnet for continually charging the chargeable battery.

According to another preferred aspect of the system, a sensor provided on each wheel senses air pressure in each tire cavity.

According to still another preferred aspect of the system, a control unit in a passenger compartment of the vehicle displays air pressure sensed by the sensors and electrical interconnection units for electrically interconnecting the control unit to each bidirectional pump, each battery assembly, and each sensor for controlling application of electrical power from the battery assemblies to the sensors and the bidirectional pumps.

According to yet another preferred aspect of the system, the vehicle includes an axle on which two wheels are rotatably mounted and each corresponding interconnection unit includes first electrical contacts which are provided on an inner periphery of each wheel and second electrical contacts which are provided on an outer periphery of the axle and electrically engaged with the respective first electrical contacts.

According to still another preferred aspect of the system, the first electrical contacts include brushes.

A vehicle wheel on which an air-inflatable tire is mounted in accordance with a preferred aspect of the present invention forms a tire cavity. The vehicle wheel includes a rim for mounting the tire and a bidirectional pump for selectively pumping air from the tire cavity to atmosphere for deflating the tire and for pumping air from atmosphere into the tire cavity for inflating the tire.

According to a preferred aspect of the wheel, a sensor senses the air pressure in the tire cavity.

According to another preferred aspect of the wheel, a control unit is mounted in a passenger compartment of the vehicle and a battery assembly is mounted to the wheel.

According to yet another preferred aspect of the wheel, the battery assembly powers the control unit and the bidirectional pump.

According to still another preferred aspect of the wheel, the control unit operates the bidirectional pump.

### Brief Description of the Drawings

The features of the present invention are set forth with particularity in the appended claims. The invention, together with further objects and advantages thereof, may best be understood by making reference to the following description, taken in conjunction with the accompanying drawings, in the several figures of which like reference numerals identify identical elements, wherein:

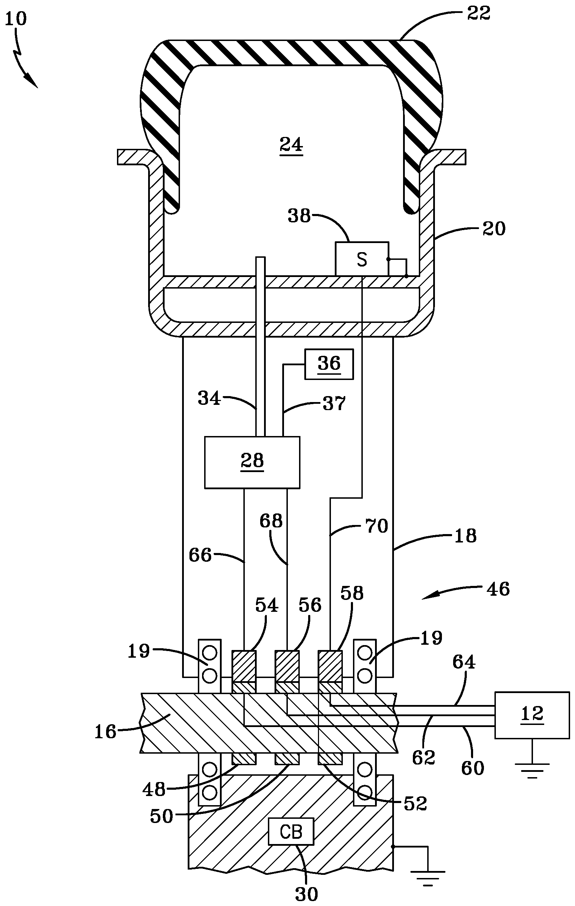

FIG. 1 is a vertical sectional view illustrating one example of a vehicle tire pressure management system in accordance with the present invention.

### Detailed Description of Example Embodiments of the Present Invention

A tire pressure management system 10 in accordance with the present invention is illustrated in FIG. 1. The system 10 is similar to the system disclosed by US-A-5,452,753 to Olney. The system 10 includes a control unit 12 which is preferably provided on a dashboard or other location in a driver's compartment of a motor vehicle or other suitable location which is accessible without exiting the vehicle. The vehicle preferably includes a plurality of axles, generally four, on which preferably identical wheels with air-inflatable tires are mounted. One axle 16 is illustrated in FIG. 1. A wheel 18 is rotatably mounted on the axle 16 by bearings 19 and preferably includes a rim 20 on which a tire 22 is mounted. A tire cavity 24 is defined between the rim 20 and the interior surface of the tire 22.

A compressor or pump 28 is mounted on the wheel 18, preferably as close to the axle 16 as possible to minimize the moment of inertia. A counterbalance 30 is preferably provided in the wheel 18 at a position which is diametrically opposed to the pump 28 to eliminate the wheel imbalance created by the pump 28. The pump 28 has one port connected to the tire cavity 24 through a conduit 34. The pump 28 is a bi-directional unit, capable of selectively pumping air either into the tire cavity 24 or out of the tire cavity.

An air pressure sensor 38 is preferably mounted on the rim 20 inside the tire cavity 24 and provides an electrical signal corresponding to the sensed tire air pressure in the tire cavity to the control unit 12. The control unit 12 may include a display for each wheel 18 displaying the tire pressure as sensed by the sensor 38, a switch or button for increasing the tire pressure, and a switch or button for decreasing the tire pressure.

One button may be depressed to increase the tire pressure from the value indicated on the display. This may cause the pump 28 to pump air from atmosphere through the conduit 34 into the tire cavity 24 to inflate the tire 22 further. The other button may be depressed to decrease the tire pressure from the value indicated on the display. This may cause the pump 28 to pump air from the tire cavity 24 through the conduit 34 to atmosphere to deflate the tire 22.

The control unit 12 is connected to the sensor 38 and pump 28 by an interconnection unit 46. The interconnection unit 46 preferably includes electrical contacts in the form of annular rings 48, 50 and 52 provided on the outer periphery of the axle 16. Corresponding electrical contacts in the form of brushes 54, 56, and 58 are preferably provided on the inner periphery of the wheel 18 to make direct electrical contact with the rings 48, 50, and 52, respectively.

The rings 48, 50 and 52 are connected to the control unit 12 through lines 60, 62, and 64. The brushes 54, 56 are connected to the pump 28 through lines 66, 68, whereas the brush 58 is connected to the sensor 38 through line 70. Although not illustrated in detail, the rings 48, 50, and 52, brushes 54, 56, and 58 and lines 60, 62, 64, 66, 68, and 70 are preferably electrically insulated from the axle 16 and the wheel 18.

The axle 16, wheel 18, and the negative terminal of a battery 36 mounted on the wheel may be connected to the chassis of the vehicle and designated as ground. One contact of the sensor 38 may be connected to the rim 20 and thereby to ground. This may provide a complete circuit path between the sensor 38 and the control unit 12 via the line 70, brush 58, ring 52, and line 64. The pump 28 may include an electric motor including a winding (not shown) having one end connected to the control unit 12 through the line 66, brush 54, ring 48 and line 60, and an opposite end connected to the control unit 12 through the line 68, brush 56, ring 50 and line 62.

The control unit 12 and the electric motor/pump 28 are powered by a battery assembly 36 mounted on the wheel 18. The pump 28 thus pumps air from atmosphere into the tire cavity 24, as needed, by connecting the positive terminal of the battery assembly 36 to the pump via line 37. The pumping direction may be reversed by the control unit 12 to pump air from the tire cavity 24 to atmosphere. A battery of the battery assembly 36 may be continually by the current generated by a magnet that is also part of the battery assembly.

The control unit 12 may include a separate display and buttons for each tire of the vehicle and/or a switch for switching the display readout and buttons between the tires. If the pressures in the tires are maintained approximately equal, the pressure in only one tire may be sensed, and only one display and buttons may be provided. In this case, the buttons may be connected to cause inflation or deflation of all of the tires simultaneously. The control unit 12 may further sense the pressures in all of the tires, compute and display the average thereof, and inflate or deflate all of the tires together based on the displayed average pressure. As yet another alternative, the control unit 12 may be designed to automatically, rather than manually, regulate the pressures in the tires to a value set on the display. In this case, the buttons may be used to adjust the display readout up or down to a newly desired value of tire pressure.

## Claims

1. A tire management system for a vehicle having at least two wheels, the system comprising:
a plurality of wheels (18) on each of which a respective air-inflatable tire (22) is mounted having a tire cavity (24);
a bidirectional pump (28) on each of the plurality of wheels (18) for selectively pumping air from each respective tire (22) to atmosphere for deflating said tire (22) and for pumping air from atmosphere into each respective tire cavity (24) for inflating said tire (22); and
a battery assembly (36) mounted to each of the plurality of wheels (18) for powering the respective bidirectional pump (28); wherein the battery assemblies (36) each include a chargeable battery and a magnet.

2. The tire management system as set forth in claim 1 further comprising a sensor (38) provided on each wheel (18) for sensing air pressure in each tire cavity (22).

3. The tire management system as set forth in claim 2 further comprising a vehicle on which the plurality of wheels (18) are mounted and a control unit provided in a passenger compartment of the vehicle for displaying air pressure sensed by the sensors (38).

4. The tire management system as set forth in claim 2 or 3 further comprising one or more electrical interconnection units (46) for electrically interconnecting the control unit to each bidirectional pump (28), each battery assembly (36) and each sensor for controlling application of electrical power from the battery assemblies (36) to the sensors and the bidirectional pumps (28).

5. The tire management system as set forth in claim 3 or 4 wherein the vehicle includes an axle (16) on which two wheels (18) are rotatably mounted, wherein each of said wheels (18) includes an electrical interconnection unit (46), and wherein each of said interconnection units (46) includes first electrical contacts which are provided on an inner periphery of each wheel (18) and second electrical contacts which are provided on an outer periphery of the axle (16) and electrically engaged with the respective first electrical contacts.

6. The tire management system as set forth in claim 4 wherein the first electrical contacts include brushes (54, 56, 58).

7. The tire management system as set forth in at least one of the previous claims wherein each wheel (18) comprises a rim (20) and wherein said tire (22) is mounted to the rim (20), the tire (22) and the rim (20) defining the tire cavity (24).

8. The tire management system as set forth in at least one of the previous claims wherein the battery assemblies (36) are configured to allow for a continual charging of the chargeable battery.

9. A vehicle wheel on which an air-inflatable tire (22) can be mounted to form a tire cavity (24), the wheel (18) comprising:
a rim (20) for mounting the tire (22); and
a bidirectional pump (28) for selectively pumping air from the tire cavity (24) to atmosphere for deflating the tire (22) and for pumping air from atmosphere into the tire cavity (24) for inflating the tire (22).

10. The wheel as set forth in claim 9 further comprising a sensor for sensing air pressure in the tire cavity.

11. The wheel as set forth in claim 9 or 10 wherein a battery assembly (36) is provided for powering the bidirectional pump (28) and mounted to the wheel (18).

12. A vehicle comprising the vehicle wheel in accordance with at least one of the claims 9 to 11 or a tire management system in accordance with at least one of the claims 1 to 8 wherein a control unit operates the bidirectional pump (28).

13. The vehicle as set forth in claim 12 further comprising the control unit is mounted in a passenger compartment of the vehicle.

## Patentansprüche

1. Reifenverwaltungssystem für ein Fahrzeug mit mindestens zwei Rädern, wobei das System umfasst:
eine Vielzahl von Rädern (18), wobei an jedem davon ein jeweiliger luftbefüllbarer Reifen (22), der einen Reifenhohlraum (24) aufweist, montiert ist;
eine bidirektionale Pumpe (28) an jedem der Vielzahl von Rädern (18) zum selektiv Pumpen von Luft aus jedem jeweiligen Reifen (22) in die Atmosphäre zum Ablassen des Reifens (22) und zum Pumpen von Luft aus der Atmosphäre in jeden jeweiligen Reifenhohlraum (24) zum Befüllen des Reifens (22); und
eine an jedem der Vielzahl von Rädern (18) montierte Batterieanordnung (36) zur Energieversorgung der jeweiligen bidirektionalen Pumpe (28); wobei die Batterieanordnungen (36) jede eine aufladbare Batterie und einen Magneten beinhalten.

2. Reifenverwaltungssystem nach Anspruch 1, weiter einen an jedem Rad (18) angebrachten Sensor (38) zum Abtasten des Luftdrucks in jedem Reifenhohlraum (22) umfassend.

3. Reifenverwaltungssystem nach Anspruch 2, weiter ein Fahrzeug umfassend, woran die Vielzahl von Rädern (18) montiert ist, und eine in einem Insassenraum des Fahrzeugs angebrachte Steuereinheit zum Anzeigen von durch die Sensoren (38) abgetastetem Luftdruck.

4. Reifenverwaltungssystem nach Anspruch 2 oder 3, weiter eine oder mehrere elektrische Verbindungseinheiten (46) zum elektrischen Verbinden der Steuereinheit mit jeder bidirektionalen Pumpe (28), jeder Batterieanordnung (36) und jedem Sensor zur Steuerung des Anlegens von elektrischer Energie von den Batterieanordnungen (36) an die Sensoren und die bidirektionalen Pumpen (28) umfassend.

5. Reifenverwaltungssystem nach Anspruch 3 oder 4, wobei das Fahrzeug eine Achse (16) beinhaltet, woran zwei Räder (18) drehbar montiert sind, wobei jedes der Räder (18) eine elektrische Verbindungseinheit (46) beinhaltet, und wobei jede der Verbindungseinheiten (46) erste elektrische Kontakte, die an einem Innenumfang jedes Rades (18) angebracht sind, und zweite elektrische Kontakte, die an einem Außenumfang der Achse (16) angebracht und elektrisch in Eingriff mit den jeweiligen ersten elektrischen Kontakten sind, umfasst.

6. Reifenverwaltungssystem nach Anspruch 4, wobei die ersten elektrischen Kontakte Bürsten (54, 56, 58) beinhalten.

7. Reifenverwaltungssystem nach mindestens einem der vorhergehenden Ansprüche, wobei jedes Rad (18) eine Felge (20) umfasst und wobei der Reifen (22) auf der Felge (20) montiert ist, wobei der Reifen (22) und die Felge (20) den Reifenhohlraum (24) definieren.

8. Reifenverwaltungssystem nach mindestens einem der vorhergehenden Ansprüche, wobei die Batterieanordnungen (36) dazu eingerichtet sind, ein kontinuierliches Aufladen der aufladbaren Batterie zu gestatten.

9. Fahrzeugrad, woran ein luftbefüllbarer Reifen (22) montiert werden kann, um einen Reifenhohlraum (24) zu bilden, wobei das Rad (18) umfasst:
eine Felge (20) zum darauf Montieren des Reifens (22); und
eine bidirektionale Pumpe (28) zum selektiv Pumpen von Luft aus dem Reifenhohlraum (24) in die Atmosphäre zum Ablassen des Reifens (22) und zum Pumpen von Luft aus der Atmosphäre in den Reifenhohlraum (24) zum Befüllen des Reifens (22).

10. Rad nach Anspruch 9, weiter einen Sensor zum Abtasten von Luftdruck in dem Reifenhohlraum umfassend.

11. Rad nach Anspruch 9 oder 10, wobei eine Batterieanordnung (36) zur Energieversorgung der bidirektionalen Pumpe (28) vorgesehen und an dem Rad (18) montiert ist.

12. Fahrzeug, umfassend das Fahrzeugrad gemäß mindestens einem der Ansprüche 9 bis 11 oder ein Reifenverwaltungssystem gemäß mindestens einem der Ansprüche 1 bis 8, wobei eine Steuereinheit die bidirektionale Pumpe (28) bedient.

13. Fahrzeug nach Anspruch 12, weiter die Steuereinheit umfassend, welche in einem Insassenraum des Fahrzeugs montiert ist.

## Revendications

1. Système de gestion de bandage pneumatique pour un véhicule comportant au moins deux roues, le système comprenant :
plusieurs roues (18) sur chacune desquelles est monté un bandage pneumatique respectif (22) qui peut être gonflé avec de l'air et qui possède une cavité de bandage pneumatique (24) ;
une pompe bidirectionnelle (28) sur chacune desdites plusieurs roues (18) pour pomper de manière sélective de l'air à partir de chaque bandage pneumatique respectif (22) en direction de l'atmosphère pour le dégonflage dudit bandage pneumatique (22) et pour pomper de l'air à partir de l'atmosphère jusque dans chaque cavité respective du bandage pneumatique pour le gonflage dudit bandage pneumatique (22) ; et
un assemblage d'accumulateur (36) monté sur chacune desdites plusieurs roues (18) pour faire fonctionner la pompe bidirectionnelle respective (28) ; dans lequel les assemblages d'accumulateurs (36) englobent chacun un accumulateur rechargeable et un aimant.

2. Système de gestion de bandage pneumatique selon la revendication 1, comprenant en outre un capteur (38) prévu sur chaque roue (18) pour détecter la pression de l'air dans chaque cavité de bandage pneumatique (22).

3. Système de gestion de bandage pneumatique selon la revendication 2, comprenant en outre un véhicule sur lequel sont montées lesdites plusieurs roues (18) et une unité de commande prévue dans un compartiment passager du véhicule pour afficher la pression de l'air détectée par les capteurs (38).

4. Système de gestion de bandage pneumatique selon la revendication 2 ou 3, comprenant en outre une ou plusieurs unités d'interconnexion électrique (46) pour l'interconnexion électrique de l'unité de commande à chaque pompe bidirectionnelle (28), à chaque assemblage d'accumulateur (36) et à chaque capteur pour commander une application de courant électrique à partir des assemblages d'accumulateurs (36) jusqu'au capteur et jusqu'aux pompes bidirectionnelles (28).

5. Système de gestion de bandage pneumatique selon la revendication 3 ou 4, dans lequel le véhicule englobe un essieu (16) sur lequel deux roues (18) sont montées en rotation; dans lequel chacune desdites roues (18) englobe une unité d'interconnexion électrique (46) ; et dans lequel chacune desdites unités d'interconnexion (46) englobe des premiers contacts électriques qui sont prévus sur une périphérie interne de chaque roue (18) et des seconds contacts électriques qui sont prévus sur une périphérie externe de l'essieu (16) et qui sont mis en contact électrique avec les premiers contacts électriques respectifs.

6. Système de gestion de bandage pneumatique selon la revendication 4, dans lequel les premiers contacts électriques englobent des balais (54, 56, 58).

7. Système de gestion de bandage pneumatique selon au moins une des revendications précédentes, dans lequel chaque roue (18) comprend une jante (20) ; et dans lequel ledit bandage pneumatique (22) est monté sur la jante (20), le bandage pneumatique (22) et la jante (20) définissant la cavité de bandage pneumatique (24).

8. Système de gestion de bandage pneumatique selon au moins une des revendications précédentes, dans lequel les assemblages d'accumulateurs (36) sont configurés pour permettre une recharge en continu de l'accumulateur rechargeable.

9. Roue de véhicule sur laquelle on peut monter un bandage pneumatique (22) qui peut être gonflé avec de l'air, pour obtenir une cavité de bandage pneumatique (24), la roue (18) comprenant :
une jante (20) pour le montage du bandage pneumatique (22) ;
une pompe bidirectionnelle (28) pour le pompage sélectif d'air à partir de la cavité de bandage pneumatique (24) en direction de l'atmosphère pour le dégonflage du bandage pneumatique (22) et pour le pompage d'air à partir de l'atmosphère jusque dans la cavité (28) du bandage pneumatique pour le gonflage du bandage pneumatique (22).

10. Roue selon la revendication 9, comprenant en outre un capteur pour détecter la pression de l'air dans la cavité du bandage pneumatique.

11. Roue selon la revendication 9 ou 10, dans laquelle on prévoit un assemblage d'accumulateur (36) pour faire fonctionner la pompe bidirectionnelle (29) et qui est monté sur la roue (18).

12. Véhicule comprenant la roue de véhicule selon au moins une des revendications 9 à 11 ou système de gestion de bandage pneumatique selon au moins une des revendications 1 à 8, dans lequel une unité de commande fait fonctionner la pompe bidirectionnelle (28).

13. Véhicule selon la revendication 12, comprenant en outre le fait que l'unité de commande est montée dans un compartiment passager du véhicule.
